Europäisches Patentamt

European Patent Office

Office européen des brevets

(11) Publication number: **0 055 368**
**B1**

# EUROPEAN PATENT SPECIFICATION

(45) Date of publication of patent specification: **26.06.85**

(21) Application number: **81108983.8**

(22) Date of filing: **27.10.81**

(51) Int. Cl.⁴: **B 23 K 35/30,** B 23 K 35/00 // H01L21/48

(54) Process for brazing.

(30) Priority: **31.12.80 US 221603**

(43) Date of publication of application:
**07.07.82 Bulletin 82/27**

(45) Publication of the grant of the patent:
**26.06.85 Bulletin 85/26**

(84) Designated Contracting States:
**DE FR GB IT**

(56) References cited:
FR-A- 932 746
FR-A-1 052 958
FR-A-1 418 430
GB-A- 677 012
US-A-3 892 564

IBM TECHNICAL DISCLOSURE BULLETIN, Vol.
20, No. 4, September 1977 NEW YORK (US) G.
DUMAINE et al.: "Deposit of a Preform for
Encapsulating Multilayer Ceramic Modules"
page 1470

(73) Proprietor: **International Business Machines Corporation**
**Old Orchard Road**
**Armonk, N.Y. 10504 (US)**

(72) Inventor: **Cammarano, Armando Salvatore**
**Guerney Drive Hyde Park**
**New York 12538 (US)**
Inventor: **DiGiacomo, Giulio**
**King Road Hopewell Junction**
**New York 12533 (US)**

(74) Representative: **Oechssler, Dietrich, Dr.rer.nat. Dipl.-Chem.**
**Schönaicher Strasse 220**
**D-7030 Böblingen (DE)**

## Description

The invention relates to a brazing process in which two structures are joined together with a gold-rich brazing solder.

In the manufacture of electronic systems, one step involves the brazing of electrical connection pins to metal pads on electronic chips. A braze material commonly used for this bonding is composed of 80/20 Au/Sn. During a typical manufacturing process, a device may be heated and reheated 10 or 15 times, or perhaps even more, as additional chips are joined to a substrate and as corrections, repairs and engineering changes are made to the device. Each time one of these reheating, or "reflow" steps is performed, all existing brazed joints will be reheated to some extent. This reheating of existing brazed joints can result in degradation of the metallurgy of the braze joint. This reduces the strength of the joint and can lead to pins tilting or even falling off entirely during handling of the substrate.

In the FR—A—1 052 958 a process is described for brazing together pieces of e.g. copper wherein a layer Au or Ag deposited on the one piece and a layer of Sn or In deposited on the other piece are heated to form a joint by forming a superficial alloy of Au or Ag with Sn or In. It is described in the French patent, that the joint is heat resistant in the vacuum also at temperatures 200°C higher than its formation temperature.

The object of the invention is to provide a brazing process in which at least one of the pieces to be brazed is covered by a gold-rich alloy layer prior to the brazing in the area where the brazing takes place and with which joints are formed that remain intact even if subjected to one or several heating cycles.

This object is achieved by a process as indicated at the beginning of this specification, using the feature of the characterizing part of claim 1.

Using the inventive process, the melting temperature of the resulting brazed joint is raised to a temperature that is substantially above the melting temperature of the brazing solder which has been used initially to make the joint. Thus, the resulting joint will be far less likely to be affected by subsequent reflows. The invention has two essential elements: the particular metal added to the braze solder and the manner in which it is added. We have discovered that, especially in a process in which a gold-rich brazing solder is used, the preferred metal to add is copper. Copper exhibits substantial advantages over all other alternatives that we have investigated. We have also discovered that the best way to add the copper is to provide it in the form of a film. In accordance with a preferred embodiment of our invention, the copper film is provided by plating it onto one of the surfaces to be joined. In accordance with another embodiment of the invention, the copper film is provided by a copper "preform" which may be used in conjunction with braze solder preforms. The inventive method is particularly useful for joining chips to a substrate in the manufacturing of electronic systems.

Preferably the amount of copper provided is sufficient to provide an amount of copper equal to approximately seven percent by weight of the metal in the resulting braze joint.

The invention will be more apparent from the following detailed description taken in conjunction with the accompanying drawings.

Fig. 1 shows a fragment of a multilayered ceramic substrate having a connecting pad that is to be brazed to a pin in accordance with this invention.

Fig. 2 shows details of a braze joint structure after brazing in accordance with the invention.

Fig. 3 is similar to Fig. 1 but showing an alternative embodiment of the invention.

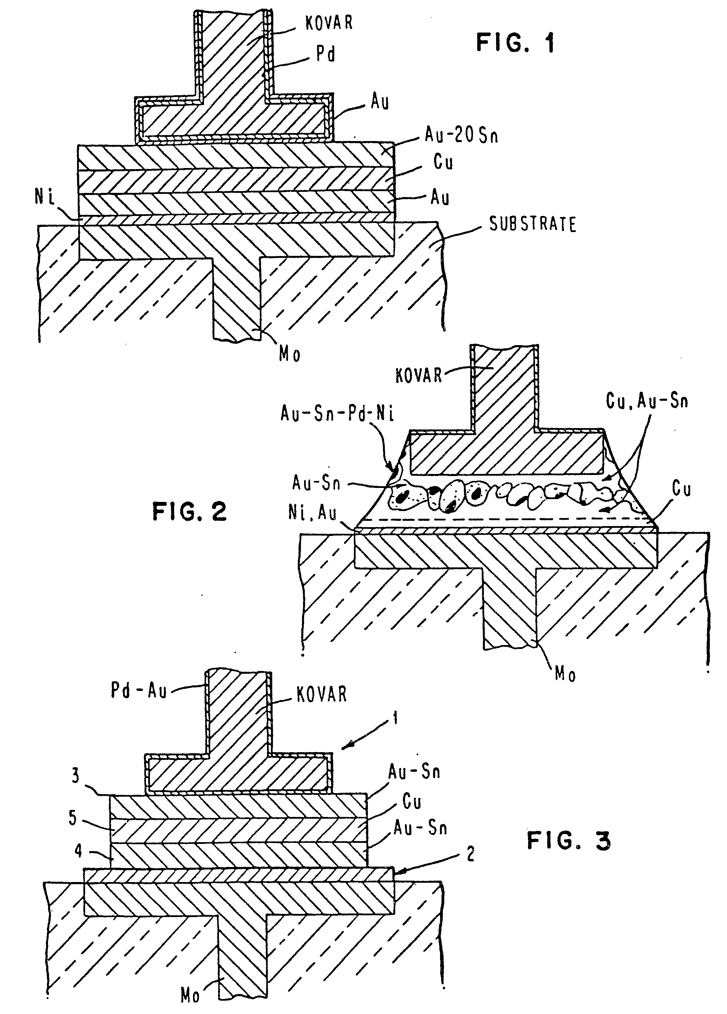

Fig. 1 shows a portion of a multi-layered ceramic substrate carrying a molybdenum (Mo) pad which is conventionally protected with a layer of nickel (Ni) approximately 3 µm thick. On top of the Ni is a film (approximately 1/4 µm) of gold (Au). Also shown in Fig. 1, ready to be brazed to the pad is an electrical connecting pin constructed primarily of Kovar coated with a film of paladium (Pd) approximately 4 µm thick on which another film of Au approximately 1 1/4 µm thick is also used. In order to join the pin to the pad, an 80/20 Au/Sn brazing solder is also provided.

Everything described in the preceding paragraph is completely conventional in processes for bonding pins to pads. The additional feature shown in Fig. 1, in accordance with our invention, is the layer of copper (Cu), preferably approximately 8 µm in thickness, that is plated onto the top of the Mo/Ni/Au pad. The layer of Cu can have been plated onto the pad by, for example, evaporation or electrodeposition or any other manner known to those skilled in the art.

Brazing of the pin to the pad with the 80/20 Au/Sn brazing solder then proceeds exactly as it would have if the additional Cu layer had not been provided. When the brazing solder and the surfaces to be joined are heated to above approximately 280°C (the liquidus point for the eutectic 80/20 alloy) the brazing solder melts and the copper diffuses through the Au/Sn brazing solder to form a ternary Au/Sn/Cu alloy. The copper diffuses through the rest of the brazing solder so quickly that the diffusion goes to completion in a time that is quite short with respect to the brazing cycle. Perhaps a matter of just a few seconds. Upon cooling, there will be a resulting brazed joint which, because of the addition of the Cu, has a solidus point of approximately 350°C, in contrast to the temperature of 280°C that was required in order to form the joint in the first place. Thus, subsequent reflows involving the substrate which might heat this joint to as much as approximately 350°C will not affect the integrity of this brazed joint.

The structure of the resulting brazed joint is shown in Fig. 2. Above the surface of the pad there will remain some Cu that is bonded to the upper layers of the pad. Above the Cu is the braze joint itself that is substantially comprised of Au, Sn and Cu. Laboratory analyses of brazed joints prepared in accordance with the invention have shown the joint to be comprised substantially of a Cu/Au/Sn alloy (approximately 70% of the joint), a Au/Sn alloy (approximately 25% of the joint) and a Au/Sn/Pd/Ni alloy (approximately 5% of the joint). The latter alloy is a result of the migration of Pd and Ni from the pin and the pad into the brazed joint.

The following table depicts further details of the brazed joint. The table shows the percent by weight of metals found, by laboratory analysis, within various portions of the brazed joint. For each portion, two sets of figures are given. The first set of figures shows the percentages of various metals within a joint as brazed (As-B); that is, immediately after brazing. The second set of figures shows the composition of a joint after 15 reflows (15 Rf) at approximately 350°C. The most significant point shown by the table is that the brazed joint is quite stable throughout a large number of reflows. (Differences between the first and second sets of figures are partly attributable to (1) measuring accuracies, and (2) the face that the first and second sets were from measurements on different braze joints).

| | Au-Sn-Cu 70% | | Au-Sn 25% | | Au-Sn-Pd-Ni 5% | | Bulk 100% | |
|---|---|---|---|---|---|---|---|---|
| | As-B | 15 Rf | As-B | 15 Rf | As-B | 15 Rf | As-B | 15 Rf |
| Au | 77.4 | 79.6 | 61.3 | 61.9 | 27.9 | 32.2 | 70.0 | 71.9 |
| Sn | 8.9 | 10.9 | 37.1 | 36.4 | 44.8 | 41.9 | 20.2 | 19.1 |
| Cu | 14.5 | 11.4 | 0.4 | 0.4 | 2.7 | 2.1 | 7.0 | 6.4 |
| Pd | 0.4 | 0.1 | 0.6 | 0.2 | 13.5 | 16.3 | 1.6 | 1.1 |
| Ni | 0.1 | 0.0 | 0.1 | 0.0 | 10.7 | 6.6 | 0.3 | 0.15 |

One other important point is illustrated by the table. It is significant to note that the total bulk of the brazed joint contains approximately 7% Cu. For this reason, in preferred embodiments of the invention, a sufficient amount of Cu is provided so that there will be enough Cu to form at least 7% by weight of the final brazed joint. A preferred way of providing a sufficient amount of copper is to provide a copper film that is approximately 1/8 the thickness of the Au/Sn brazing solder. Note that one feature of this invention is that the precise amount of copper provided is not critical, so long as enough is provided. As is illustrated in Fig. 2, any excess copper (that is, copper that is not alloyed into the braze joint itself) simply forms a smooth transition from one surface to the brazed joint. From the pad to the pin, all transitions are smooth and homogeneous. As is further illustrated by the diagram of Fig. 2, the use of this method results in a joint with substantially no intermetallics and minimal voids. As is known to those skilled in the art, the presence of intermetallics and voids in a brazed joint are substantial contributors to joint failure.

Referring now to Fig. 3, an alternative embodiment of the invention is illustrated. Fig. 3 again depicts a pin 1 that is to be joined to a pad 2. However, this time the brazing material comprises two layers 3 and 4 of 80/20 Au/Sn, one of which is placed in contact with pin 1 and the other of which is in contact with pad 2. In accordance with this alternative embodiment of our invention, intermediate the two layers of Au/Sn is an additional layer of Cu 5. When brazing takes place the additional layer of Cu 5 will diffuse through the brazed joint in the same manner as has been described above.

In the preceding descriptions of preferred embodiments of the invention, examples were used of a pin and a pad having, respectively, a Pd/Au surface and a Ni/Au surface. However, it should be recognized that the surface upon which the Cu is placed can be any surface to which the Cu can be bonded metallurgically or even mechanically.

Also, although we have described a process using Au/Sn solder, it will be recognized that other gold-rich solders, such as for example, Au/In could also be used.

Although, as has been noted above although we prefer to electroplate the copper onto one of the surfaces to be joined, those skilled in the art will recognize that many other appropriate methods for placing the copper on the surface can be used.

Another advantage of our invention which will be clear from the above description is that although it adds a step to existing processes for brazing items together, the added step (providing a film of Cu) does not affect the other steps in an existing brazing process. Also of significance is the fact that a common Au/Sn braze, with which those skilled in the art are quite familiar, can be used without alteration.

**Claims**

1. Brazing process in which two structures are joined together with a gold-rich brazing solder, characterized by the additional step of:

providing a film of copper on one of the surfaces to be joined, there being sufficient copper present in the film to form a brazed joint having a melting temperature higher than that of the copper-free, gold-rich brazing solder.

2. Process according to claim 1, wherein the amount of copper that is provided is sufficient so that it can provide an amount of copper equal to approximately 7% by weight of the metal in the resulting brazed joint.

3. Process according to claim 1 or claim 2, wherein the step of providing a film of copper comprises:

bonding a film of copper to at least one of the surfaces that is to be brazed.

4. Process according to claim 3, wherein the at least one of the surfaces is formed by a gold layer.

5. Process according to claim 1 or claim 2, wherein the gold-rich brazing solder is provided in two separate films, each film being in contact with one of the structures to be brazed, and the copper film is sandwiched between said two gold-rich films.

## Patentansprüche

1. Lötverfahren, in welchem zwei Strukturen mit einem an Gold reichen Lötmittel zusammengefügt werden, gekennzeichnet durch folgenden züsätzlichen Schritt:

Bereitstellen eines Kupferfilms auf einer der zusammenzufügenden Oberflächen, wobei der Film ausreichend Kupfer enthält, um eine gelötete Verbindung mit einer Schmelztemperatur herzustellen, die höher ist als die des kupferlosen an Gold reichen Lötmittels.

2. Verfahren nach Anspruch 1, in welchem die bereitgestellte Kupfermenge ausreicht, um die Kupfermenge in der resultierenden gelöteten Verbindung auf ungefähr gleich 7 Gew.-% des Metalls einzustellen.

3. Verfahren nach Anspruch 1 oder 2, worin das Verfahren zum Bereitstellen des Kupferfilms das Aufbringen eines Kupferfilms auf mindestens einer der zu lötenden Oberflächen umfaßt.

4. Verfahren nach Anspruch 3, worin die mindestens eine Oberfläche aus einer Goldschicht besteht.

5. Verfahren nach Anspruch 1 oder 2, worin das an Gold reiche Lötmittel in zwei getrennten Schichten bereitgestellt wird, wobei jede Schicht mit einer der zusammen zu lötenden Strukturen in Kontakt ist, und wobei die Kupferschicht zwischen den zwei Schichten mit hohem Goldgehalt eingefügt wird.

## Revendications

1. Procédé de brasage selon lequel deux structures sont réunies l'une à l'autre à l'aide d'une brasure riche en or, caractérisé par la phase opératoire supplémentaire consistant à apposer une pellicule de cuivre sur l'une des surfaces devant être réunies, une quantité de cuivre suffisante étant présente dans la pellicule pour former un joint brasé possédant une température de fusion supérieure à celle de la brasure riche en or et exempte de cuivre.

2. Procédé selon la revendication 1, selon lequel la quantité de cuivre, qui est prévue, est suffisante pour que l'on puisse obtenir une quantité de cuivre égale à environ 7% en poids du métal dans le joint brasé obtenu.

3. Procédé selon la revendication 1 ou 2, selon lequel la phase opératoire consistant à apposer une pellicule de cuivre inclut la fixation d'une pellicule de cuivre sur au moins l'une des surfaces qui doit être brasée.

4. Procédé selon la revendication 3, selon lequel au moins ladite surface est formée par une couche d'or.

5. Procédé selon la revendication 1 ou 2, selon lequel la brasure riche en or est prévue en deux pellicules séparées, dont chacune est en contact avec l'une des structures devant être brasées et la pellicule de cuivre est prise en sandwich entre lesdites deux pellicules riches en or.

FIG. 1

FIG. 2

FIG. 3